# FASCICULE DE BREVET EUROPEEN

(11) **EP 0 731 976 B1**
(45) Date de publication et mention de la délivrance du brevet: **26.08.1998**
(21) Numéro de dépôt: 95902801.0
(22) Date de dépôt: 29.11.1994
(51) Int. Cl.: H01G 9/055

(54) **FEUILLES POUR CONDENSATEURS A HAUTES PERFORMANCES**
FOLIEN FÜR HOCHLEISTUNGSKONDENSATOREN
SHEETS FOR HIGH PERFORMANCE CAPACITORS

(30) Priorité: 01.12.1993 FR 9314620
(43) Date de publication de la demande: 18.09.1996
(73) Titulaire: PECHINEY RHENALU, 92400 Courbevoie (FR)
(72) Inventeur: CHENAL, Bruno, F-38960 St.-Etienne-de-Crossey (FR)
(74) Mandataire: Mougeot, Jean-Claude
(86) Numéro de dépôt international: FR9401383
(87) Numéro de publication internationale: WO9515573

(56) Documents cités:
- DATABASE WPI Section Ch, Week 9240, Derwent Publications Ltd., London, GB; Class L03, AN 92-326897 & JP,A,4 231 440 (FURUKAWA ALUMINIUM) 20 Août 1992
- DATABASE WPI Section Ch, Week 8521, Derwent Publications Ltd., London, GB; Class L03, AN 85-125427 & JP,A,60 063 359 (TOYO ALUMINIUM KK) 11 Avril 1985
- Journal of Japan Institute of Light Metals, Vol.31, No.10, October 1981, Pages 675-682, K.Arai et T.Suzuki "High Purity Aluminium Foil For Electrolytic Capacitor"

## Description

### DOMAINE DE L'INVENTION

L'invention concerne les feuilles d'aluminium raffiné destinées à servir d'anode dans un condensateur électrolytique et plus spécifiquement les feuilles d'aluminium pour anodes de condensateurs électrolytiques moyenne et haute tension.

### ETAT DE LA TECHNIQUE

Les feuilles d'aluminium raffiné destinées à servir d'anode dans un condensateur électrolytique sont obtenues à partir de lingots qui ont une épaisseur de l'ordre de quelques centaines de millimètres. Ces lingots sont successivement laminés à chaud et à froid avec des recuits intermédiaires jusqu'à l'épaisseur finale de l'ordre de 0,1 mm. La bande subit enfin un traitement thermique de recristallisation.

Dans une deuxième étape, on procède sur la bande à une gravure électrochimique (etching) destinée à augmenter la surface apparente et à une anodisation destinée à former la couche d'oxyde barrière (formation).

Il est connu que la capacité électrique de la bande est d'autant plus élevée que, avant etching et formation, la structure métallurgique comporte un fort pourcentage de grains ayant l'orientation **{** 001 **} <** 100 **>** (texture cube, appelée aussi texture en dé).

Plusieurs brevets enseignent des procédés (c'est-à-dire des gammes de laminage et traitement thermique) permettant d'augmenter sur la feuille le pourcentage de grains ayant cette orientation, communément appelé pourcentage de texture en dé.

Le brevet français FR 2113782 enseigne ainsi un procédé comportant :
1. un laminage à froid avec un taux d'écrouissage (défini comme le rapport de la variation d'épaisseur à l'épaisseur finale) supérieur à 1000 %,
2. un recuit à une température de 180 à 350°C pendant un temps compris entre un minimum qui varie de 5 secondes pour 350° à 5 heures pour 180°C et un maximum qui varie de 3 minutes pour 350° à 150 heures pour 180°C
3. un écrouissage (défini comme le rapport de la variation d'épaisseur à l'épaisseur finale) avec un taux de réduction compris entre 5 et 35%.

La demande de brevet japonais JP-60-63360/85 enseigne un procédé caractérisé par un laminage à chaud en deux parties : la première dans la direction perpendiculaire à la direction de coulée du lingot, la deuxième dans la direction de la coulée du lingot.

Les méthodes de mesure utilisées pour déterminer le pourcentage de texture en dé sont basées sur le principe suivant : l'échantillon subit une attaque chimique, un miroir est placé parallèlement à la feuille et on détermine soit à l'oeil soit avec un analyseur d'image le pourcentage de la surface de l'échantillon qui est brillante. Une telle méthode est décrite dans la demande de brevet japonais JP-60 63360/85.

De nombreuses publications font état de feuilles qui, suivant cette technique optique conventionnelle, présentent un pourcentage élevé de texture en dé. C'est le cas par exemple du résumé cité dans Database WPI Section Ch, week 9240, Derwent Publications Ltd London, GB, Class Lo3, AN 92-326897 et JP-A-4231440. Dans ce résumé, il est fait état de feuilles présentant plus de 80% de texture en dé.

Cependant, si l'on sait depuis vingt ans que la texture en dé améliore la capacité, si on a mis au point des procédés qui augmentent le pourcentage de texture en dé, on ne maîtrise pas encore l'ensemble du processus industriel.

Les mesures de capacité sur les feuilles industrielles donnent aléatoirement des résultats faibles malgré un pourcentage élevé de texture en dé.

D'autre part, quand ils ne sont pas anormalement bas, les résultats de capacité obtenus sur les feuilles industrielles plafonnent au même niveau depuis plusieurs années bloquant tout progrès dans le domaine des condensateurs électrolytiques.

### LE PROBLEME POSE

La demanderesse s'est fixée comme objectif de mettre au point une feuille d'aluminium raffiné qui permet d'obtenir, après etching, un niveau de capacité élevé, constant et reproductible.

### DESCRIPTION DE L'INVENTION

L'objet de l'invention est une feuille en aluminium raffiné destinée à servir d'anode dans un condensateur électrolytique présentant un pourcentage de texture en dé supérieur ou égal à 85%, ce pourcentage étant mesuré suivant la technique optique conventionnelle, caractérisée en ce que moins de 20% des grains ont une orientation décalée de 10° à 20° par rapport à l'orientation dé idéale, l'orientation des grains étant mesurée suivant la technique EBSD "Electron Back Scattering Diffraction".

Un grain a une orientation dé idéale lorsqu'un plan cristallographique d'indices de Miller (100) est parallèle au plan de la feuille et que sa direction cristallographique d'indices de Miller **[** 010 **]** reste parallèle à la direction de laminage de la feuille.

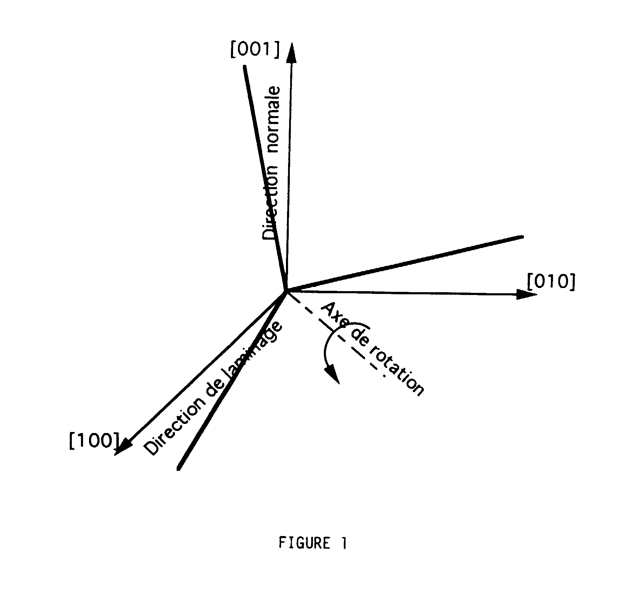

L'orientation du grain est décalée par rapport à l'orientation dé idéale lorsque le plan cristallographique d'indices de Miller (100) et la direction cristallographique d'indices de Miller [ 010 ] ne sont pas tout à fait parallèles respectivement au plan de la feuille et à la direction de laminage. Ce décalage est quantifié par l'angle qui mesure la rotation du réseau cristallin du grain par rapport à l'orientation dé idéale (voir fig. 1).

L'orientation individuelle des grains à la surface de la feuille pour condensateur peut être mesurée dans un microscope électronique à balayage à l'aide de la technique EBSD (Electron Back Scattering Diffraction). Sur chaque grain analysé se forme un réseau de lignes de Kikuchi par interaction du faisceau d'électrons primaires avec l'échantillon. Ce réseau est caractéristique de l'orientation cristallographique du grain. Il est possible avec cette technique de mesurer précisément (± 1°) l'orientation d'un grand nombre de grains. Pour des raisons statistiques, il est souhaitable d'analyser au minimum 250 grains.

L'observation de nombreux échantillons de la production habituelle a montré qu'il y a très peu de grains décalés de 20° à 40°. Au-delà de 40° de décalage, le grain a conservé une orientation de déformation de type laminage. En dessous de 10°, les rotations se produisent autour de directions aléatoires, alors qu'au-delà de 10°, elles s'exercent systématiquement autour d'axes proches de la direction de laminage ou de la direction transverse.
Il a été également constaté que de nombreux grains qui, avec les mesures optiques conventionnelles de la texture en dé, auraient été comptés comme ayant l'orientation dé, étaient en réalité décalés de 10 à 20° par rapport à l'orientation dé idéale.

Les très nombreux essais réalisés par la demanderesse (voir Exemple 1) ont montré que la présence de grains décalés de 10° à 20° par rapport à l'orientation dé était beaucoup plus néfaste pour obtenir une bonne capacité que ne le laissait supposer leur faible décalage. Les essais ont également montré que la relation entre diminution de la capacité et pourcentage de grains décalés n'était pas linéaire. La capacité diminue beaucoup plus rapidement au-delà de 20% de grains décalés.

Ni la si grande influence du pourcentage des grains décalés de 10° à 20° ni la non linéarité de l'effet n'ont pu être expliqués.

### FIGURE

La figure 1 représente schématiquement la rotation d'un grain par rapport à l'orientation dé idéale.

### EXEMPLE

Des échantillons (500 mm x 1000 mm) de feuille d'aluminium raffiné d'épaisseur 100 µm et de pureté 99,99 % ont été préparés dans les conditions suivantes :

4 échantillons A1 à A4 ont été prélevés sur quatre bobines différentes issues de la production habituelle. Ces bobines avaient été laminées dans les conditions de l'art antérieur :
- laminage froid avec un taux d'écrouissage (défini comme le rapport de la variation d'épaisseur à l'épaisseur finale) de 1500 %
- recuit de 2 heures à 200°C
- écrouissage de 25%
- recuit de recristallisation de 10 heures à 580°C.

4 autres échantillons B1 à B4 ont été prélevés dans quatre bobines différentes, laminées avec un mode opératoire particulier :
- le laminage à chaud était ajusté de manière à diminuer les germes de recristallisation qui donneraient des grains d'orientation dé décalés (en agissant sur la température de déformation et sur les attentes entre passes de laminage)
- les deux séquences de laminage à froid étaient réalisées dans des conditions particulières de traction-retenue
- les autres étapes de la gamme étaient conformes à la gamme de référence.

Des prélèvements des 8 échantillons ont été immergés pendant 30 secondes à 30°C dans une solution HCl/HNO₃/HF dans le rapport 3/3/1 diluée avec 30% d'eau. On a déterminé sur chacun d'entre eux le pourcentage de texture en dé suivant la méthode habituelle du miroir.

Des prélèvements des 8 échantillons ont été examinés ensuite suivant la technique ESBD. On a déterminé sur chacun d'entre eux la distribution des désorientations par rapport à l'orientation de et en particulier le pourcentage de grains décalés de 10° à 20° par rapport à l'orientation dé idéale.

Enfin, les 8 échantillons ont subi le même test de capacité qui a été effectué de la manière suivante :
Chaque feuille a été immergée dans une solution aqueuse contenant 5% d'acide chlorhydrique HCl et 9% de chlorure d'aluminium AlCl₃,6H₂O à la température de 85°C. L'etching a été appliqué directement par un courant continu ayant une densité de courant de 10 A/dm² pendant 800 sec. La formation de l'oxyde a été ensuite réalisée à 400 V dans une solution aqueuse à 7% d'acide borique H₃BO₃ et d'ammoniaque NH₄OH à 90°C.

Les résultats obtenus sont rassemblés dans le Tableau I.

On constate en particulier que les échantillons A1 A3 A4 tout en ayant un pourcentage de texture en dé (mesuré par la technique optique conventionnelle) correct présentent une capacité moindre que celles des échantillons B. Ce défaut de capacité est dû à la fraction volumique élevée (supérieure à 20%) des grains d'orientation décalés de 10° à 20° par rapport à l'orientation dé idéale.

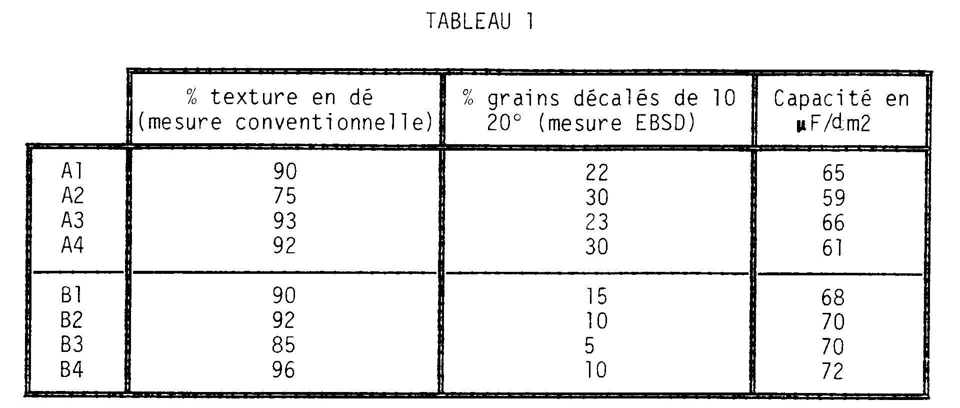

## Revendications

1. Feuille d'aluminium raffiné destinée à servir d'anode dans un condensateur électrolytique présentant un pourcentage de texture en dé supérieur ou égal à 85%, ce pourcentage étant mesuré suivant la technique optique conventionnelle, caractérisée en ce que moins de 20% des grains ont une orientation décalée de 10° à 20° par rapport à l'orientation dé idéale, l'orientation des grains étant mesurée suivant la technique EBSD "Electron Back Scattering Diffraction".

## Patentansprüche

1. Folie aus raffiniertem Aluminium, die dazu bestimmt ist, als Anode in einem Elektrolytkondensator zu dienen, welcher einen Würfeltexturanteil von größer oder gleich 85 % aufweist, wobei dieser Anteil nach der herkömmlichen Optotechnik gemessen wird, dadurch gekennzeichnet, daß weniger als 20 % der Körner eine Orientierung haben, die in Bezug auf die ideale Würfelorientierung um 10 bis 20° verschoben ist, wobei die Orientierung der Körner nach der EBSD-Technik, "Electron Back Scattering Diffraction", gemessen wird.

## Claims

1. Refined aluminium sheet intended to serve as an anode in an electrolytic capacitor, having a cubic texture, measured optically, of higher thant 85% characterized in that less than 20% of the grains have an orientation offset by 10° to 20° relative to ideal cubic orientation when measured by election back scattering diffusion.
